# EUROPÄISCHE PATENTANMELDUNG

(11) **EP 0 839 444 A1**
(43) Veröffentlichungstag der Anmeldung: **06.05.1998**
(21) Anmeldenummer: 96117390.3
(22) Anmeldetag: 30.10.1996
(51) Int. Cl.: A01J 25/11, A01J 25/12

(54) **Verfahren zum Abfüllen von teilweise entmolktem Käsebruch, Abfüll-Vorrichtung dafür und Entmolkungs-Vorrichtung**

(71) Anmelder: KALT SÖHNE AG, CH-9235 Lütisburg (CH)
(72) Erfinder: Huser, Jakob, 9607 Mosnang (CH)
(74) Vertreter: Révy von Belvárd, Peter

(57) **Zusammenfassung**

Um automatisiert Käse mit Schlitzlochungen herstellen zu können, wird das Käsebruch-Molke-Gemisch mit einem Verteilmittel (18) in mindestens zwei Teilflüsse aufgeteilt. Jeder Teilfluss wird einer Entmolkungs-Vorrichtung (3) zugeführt, welche den Käsebruch nach dem Entmolken gleichmässig in nebeneinander angeordnete Formen (2) oder Wannenbereiche abfüllt. Das Verteilmittel (18) zum Aufteilen des Käsebruch-Molke-Gemisches ist vorzugsweise als geschlossenes Rohrsystem (19-21) ausgebildet, welches das über eine Speiseleitung (23) vom Käsefertiger zugeführte Käsebruch-Molke-Gemisch gleichmässig auf mindestens zwei Leitungen (6) aufteilt. Diese Aufteilung ist sehr genau und kann aufgrund der guten Dosierbarkeit der Durchflussmenge auch nacheinander gleiche Abfüllmengen gewährleisten, was ein gleichmässiges Befüllen von Formen (2) oder Wannen (1) ermöglicht. Die an das Verteilmittel (18) anschliessenden Entmolkungs-Vorrichtungen (3) umfassen zumindest eine Lochfläche. Drehbare Trommeln (5), in deren Mantelfläche (5a) Molke-Durchtrittsöffnungen ausgebildet sind, gewährleisten eine effiziente und den Käsebruch schonende Trennung.

## Beschreibung

Die Erfindung bezieht sich auf ein Verfahren nach dem Oberbegriff des Anspruches 1, auf eine Abfüll-Vorrichtung nach dem Oberbegriff des Anspruches 5 und auf eine Entmolkungsvorrichtung nach dem Oberbegriff des Anspruches 9.

Beim Herstellen von Käse wird der Käsebruch meist mit einem hohen Anteil von Molke in Formen oder in eine Wanne eingefüllt und anschliessend gepresst. Das Einfüllen mit Molke verhindert das Entstehen von Lufteinschlüssen in der Käsemasse. Nun gibt es aber Käsesorten, wie etwa österreichischer Blocktilsiter, deren Charakter bzw. Eigenart gerade durch solche Lufteinschlüsse, bzw. die davon herrührende Schlitzlochung, bestimmt wird. Beim Herstellen solcher Käsesorten muss also der Käsebruch vor dem Einfüllen zumindest teilweise entmolkt werden. Bei den bekannten Entmolkungs-Vorrichtungen wird das Käsebruch-Molke-Gemisch auf einem vibrierenden Lochband, oder einem zur Horizontalen geneigt angeordneten, vibrierenden Lochblech in teilweise entmolkten Käsebruch und Molke aufgetrennt. Der Käsebruch wird nach dem Entmolken etwa von Leitblechen zu den Formen oder zu mehreren Bereichen einer Wanne weiter gegeleitet.

Es hat sich nun gezeigt, dass das Befüllen breiter Wannen und das gleichzeitige Befüllen mehrerer Formen nur mit sehr ungleichen Verteilungen, bzw. mit grossen Schwankungen in den Abfüllteilmengen, erzielbar ist. In Wannen wird daher der Käsebruch mit Rechen oder Abstreifern verteilt, um eine gleichmässige Verteilung bzw. eine ebene Oberfläche zu erzielen. Dieses Verteilen ist zeitaufwendig und führt häufig auch zu einer unerwünschten Beschädigung der Körner des Käsebruches. Bei ungleich befüllten Formen müssen die Abfüllmengen von Hand ausgeglichen werden. Weil ungleich verdichtete Bereiche auch nach dem Umverteilen noch verschiedene Strukturen haben können, ist das Erzielen von gleichen Käsen in mehreren Formen oder aus verschiedenen Bereichen einer Wanne nicht gewährleistet.

Die Aufgabe der Erfindung besteht nun darin, ein Verfahren und/oder eine Vorrichtung zu beschreiben, das bzw. die ein automatisches und vergleichmässigtes Trockenabfüllen von Käsebruch mit kleinem Aufwand effizient ermöglicht.

Die Lösung der Aufgabe gelingt durch die Verwirklichung der Merkmale des Anspruches 1 oder des Anspruches 5.

Bei der Lösung der Aufgabe wurde erkannt, dass die Verteilungs-Schwankungen nicht mit vernünftigem Aufwand vermieden werden können, solange das Aufteilen der Käsemasse in Teilflüsse nach dem Entmolken durchgeführt wird. Nach dem Entmolken sind die Verteilungsschwankungen in der zähflüssigen Masse zu gross, um mit Trenn- bzw. Leitblechen eine Aufteilung des Gesamtflusses in gleiche Teilflüsse zu erzielen. Zudem werden die Körner des Käsebruches bei der Förderung ohne Molke mehr beschädigt als bei einer Förderung mit Molke. Daher wird bei der erfinderischen Lösung bereits das Käsebruch-Molke-Gemisch mit einem Verteilmittel in mindestens zwei Teilflüsse aufgeteilt. Diese Aufteilung ist sehr genau und kann aufgrund der guten Dosierbarkeit der Durchflussmenge auch nacheinander gleiche Abfüllmengen gewährleisten, was ein gleichmässiges Befüllen von Formen oder Wannen mit kleinem Aufwand ermöglicht. Jeder Teilfluss wird einer Entmolkungs-Vorrichtung zugeführt. Die Anzahl der Teilflüsse entspricht der Anzahl der gleichzeitig zu befüllenden Formen, bzw. Bereiche einer Wanne.

Das Verteilmittel zum Aufteilen des Käsebruch-Molke-Gemisches ist vorzugsweise als geschlossenes Rohrsystem ausgebildet, welches das über eine Speiseleitung vom Käsefertiger zugeführte Käsebruch-Molke-Gemisch gleichmässig auf mindestens zwei Zuführleitungen aufteilt. zwischen der Speiseleitung und den Zuführleitungen sind insbesondere etwa zwei Verteilleitungen vorgesenen, die über mindestens zwei Verbindungsleitungen miteinander verbunden sind. Das Käsebruch-Molke-Gemisch ist aufgrund des hohen Flüssigkeitsanteiles einfach, genau und ohne Beschädigung der Käsebruch-Körner in gleiche Teilflüsse aufteilbar. Um ein feines Ausgleichen von Unterschieden in den Durchflussmengen der Zuführleitungen zu ermöglichen sind in diesen vorzugsweise verstellbare Düsen vorgesehen.

Die an das Verteilmittel anschliessenden Entmolkungs-Vorrichtungen umfassen zumindest ein Trennelement, vorzugsweise eine Lochfläche, wie etwa ein Blech oder ein Band, das Molke durchlässt Käsebruch aber zurückhält. Um die Trennleistung zu erhöhen, wird das Trennelement bewegbar an einer Haltevorrichtung angeordnet. Die bekannten im wesentlichen flachen Trennelemente sind meist in Rüttelbewegungen versetzbar. Es hat sich nun aber gezeigt, dass trommelförmige Trennelemente, die um eine Trommelachse drehbar angeordnet werden, eine sehr effiziente und den Käsebruch schonende Trennung ermöglichen.

Das Verteilmittel kann auch aus mehreren parallel vom Käsefertiger zu den Entmolkungs-Vorrichtungen verlaufenden Leitungen bestehen, die je mit identischen Pumpen versehen sind, oder aufgrund eines je gleichen Niveauunterschiedes von gleichen Durchflussmengen durchflossen werden. Gegebenenfalls besteht das Verteilmittel auch aus einem offenen Kanalsystem mit Überlaufkanten.

Entmolkungs-Vorrichtungen mit trommelförmigen Trennelementen sind auch unabhängig von Abfüllvorrichtungen und -verfahren neu und erfinderisch, insbesondere wenn der untenliegende Mantelbereich zur Horizontalen geneigt verläuft und in deren Mantelfläche Molke-Durchtrittsöffnungen ausgebildet sind, wobei eine Zuführleitung in einem Einfüllbereich des Trommel-innenraumes mündet, der Käsebruch unter Umwälzbewegungen auf der Mantelinnenfläche vom Einfüllbereich zu einem Austrittsbereich bewegbar ist und die durch die Molke-Durchtrittsöffnungen austretende Molke vom Käsebruch getrennt durch eine Ableitvorrichtung ableitbar ist.

Die Zeichnungen erläutern die Erfindung anhand eines schematisch dargestellten Beispieles. Dabei zeigt
- Fig. 1:: einen vertikalen Schnitt durch ein Abfüllelement; und
- Fig. 2:: einen vertikalen Schnitt durch eine Schnittebene, die zur ersten Schnittebene im wesentlichen senkrecht steht.

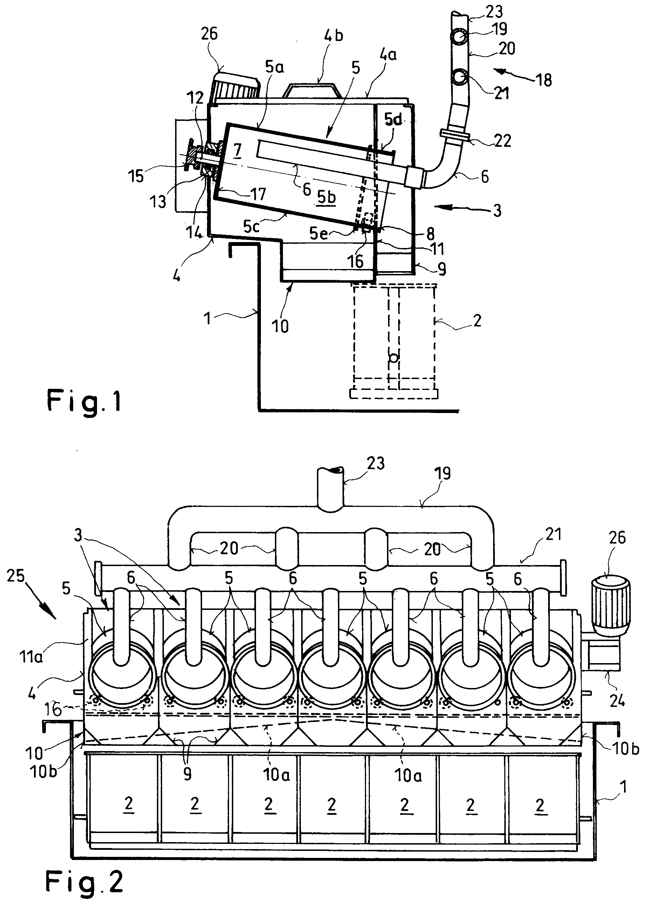

Fig. 1 zeigt eine Wanne 1 in der Formen 2, bzw. Formkassetten beispielsweise mit sieben reihenförmig miteinander verbundenen Formen 2, angeordnet sind. Über der Wanne 1 sind Entmolkungs-Vorrichtungen 3 vorgesehen, wobei die Anzahl und die vorzugsweise reihenförmige Anordnung derselben an die Zahl und die Anordnung der jeweils nebeneinander liegenden Formen, bzw. der Formen einer Kassette angepasst ist. Wird direkt die Wanne 1 befüllt, so sind die Entmolkungs-Vorrichtungen 3 Wannenbereichen, bzw. -bahnen zugeordnet. Die Anordnung nebeneinander geht besser aus der Darstellung gemäss Fig. 2 hervor.

Die bevorzugten Entmolkungs-Vorrichtungen 3 umfassen ein Gehäuse 4 bzw. eine Haltevorrichtung und eine Trommel 5 mit konischem, oder aber zylindrischem Trommelmantel 5a. Um dem Käsebruch kollernd im wesentlichen in Achsrichtung an der Innenseite des Trommelmantel 5a zumindest durch einen Teil der Trommel 5 bewegen zu können, ist die Trommel so gelagert, dass deren untenliegender Mantelbereich zur Horizontalen geneigt verläuft. Bei konischen Trommeln kann die Trommelachse horizontal verlaufen, bei zylindrischen muss sie aber zur Horizontalen geneigt sein. In der Mantelfläche sind Molke-Durchtrittsöffnungen ausgebildet, eine Zuführleitung 6 mündet in einem höhergelegenen Einfüllbereich 7 des Trommelinnenraumes 5b und der Käsebruch ist unter Umwälzbewegungen auf der Mantelinnenfläche vom Einfüllbereich 7 zu einem tiefer gelegenen Austrittsbereich 8 bewegbar. Vom Austrittsbereich fällt der Käsebruch vorzugsweise durch eine Leiteinrichtung 9 in die Form 2, der die jeweilige Entmolkungs-Vorrichtung 4 momentan zugeordnet ist.

Die durch die Molke-Durchtrittsöffnungen austretende Molke ist vom Käsebruch getrennt durch eine Ableitvorrichtung 10 ableitbar. Zwischen der Leiteinrichtung 9 und der Ableitvorrichtung 10 ist eine Trennwand 11 angeordnet, die zum Aufnehmen der Trommeln an die Trommel-Unterseiten angepasste Ausnehmungen 11a (vgl. Fig. 2) hat. Die Molke-Durchtrittsöffnungen sind nur in einem ersten Teilbereich 5c des Trommelmantels 5a angeordnet. Zwischen dem ersten 5c und einem daran anschliessenden zweiten Teilbereich 5d ist ein von der Mantelaussenseite vorstehender Abtropfring 5e angeordnet. Die Ableitvorrichtung 10 erstreckt sich unter dem gesamten ersten Teilbereich 5c bis über den Abtropfring 5e, sodass alle durch die Durchtrittsöffnugen austretende Molke von der Ableitvorrichtung 10 aufgenommen wird.

Vorzugsweise ist jede Trommel 5 an einer ersten Endfläche mit einer in der Trommelachse angeordneten Welle 12 verbunden, wobei die Welle 12 über ein Gleitlager 13 an einer mit dem Gehäuse 4 verbundenen Halterung 14 gelagert und vorzugsweise über ein Kopplungselement 15 von einem Antriebsmotor 16 antreibbar ist. Zwischen dem Motor 16 und den Kopplungselementen 15 ist ein Übertragungssystem zumindest ein Endloselement - wie etwa eine Kette oder ein Riemen - vorgesehen, das kraftschlüssig mit den Trommeln und mit dem Antriebsmotor verbindbar ist. An einer zweiten Endfläche der Trommel 5 ist eine Lagerung der Mantelfläche an vorzugsweise mindestens zwei am Gehäuse 4, bzw. der Trennwand 11 drehbar befestigten Rollen 16 vorgesehen. Auf der Oberseite des Gehäuses 4 ist dieses vorzugsweise von einem entfernbaren Gehäusedeckel 4a mit einem Griff 4b abgeschlossen.

Die Zuführleitungen 6 führen durch eine zweite Endfläche ins Innere der Trommeln 5 und münden gegenüber einer ersten Endfläche der Trommel 5, welche vorzugsweise als Prallfläche 17 ausgebildet ist. Das aus den Zuführleitungen 6 austretende Käsebruch-Molke-Gemisch fällt durch die Umlenkung an der Prallfläche 17 vergleichmässigt nach unten auf die Mantelinnenfläche. Die Zuführleitungen 6 werden vom Verteilmittel 18 gleichmässig gespiesen. Dazu umfasst dieses vorzugsweise ein geschlossenes Rohrsystem mit einem ersten, vorzugsweise über eine zentrale Zuleitung 23 gespiesenen, Verteilrohr 19, von dem mindestens zwei, insbesondere aber vier, parallele Verbindungsleitungen 20 zu einem zweiten Verteilrohr 21 führen, von welchem mindestens drei, insbesondere aber vier, fünf, sechs oder sieben Zuführleitungen 6 zu einer entsprechenden Zahl von Entmolkungs-Vorrichtungen 3 führen. Bei einer kleinen Anzahl Zuführleitungen 6, gehen diese gegebenenfalls direkt vom ersten Verteilrohr 19 aus. Um ein feines Ausgleichen von Unterschieden in den Durchflussmengen der Zuführleitungen 6 zu ermöglichen, sind in diesen vorzugsweise verstellbare Düsen 22 vorgesehen.

Fig. 2 zeigt wie mehrere, insbesondere sieben, nebeneinander angeordnete Entmolkungs-Vorrichtungen 3 über das Verteilmittel 18 mit dem Käsebruch-Molke-Gemisch aus dem Käsefertiger bzw. von der Zuleitung 23 gespiesen werden. Die parallel nebeneinander angeordneten Trommeln 5 werden von einer gemeinsamen Antriebsvorrichtung angetrieben, deren Antriebsmotor 16 vorzugsweise über eine Koppelungsvorrichtung 24 trennbar an einer aus den Gehäusen 4 gebildeten Brückeneinrichtung 25 befestigt ist und deren Übertragungssystem zumindest ein Endloselement - wie etwa eine Kette oder einen Riemen - umfasst, das kraftschlüssig mit den Trommeln und mit dem Antriebsmotor verbindbar ist. Nach dem Entfernen des Antriebsmotors 16 kann die Brückeneinrichtung 25 mitsamt den Trommeln 5, dem Übertragungssystem und dem Verteilmittel in ein Reinigungsbad eingelegt werden, was eine gründliche Reinigung mit kleinem Zeitaufwand gewährleistet.

Die Brückeneinrichtung 25 ist vorzugsweise über die Wanne 1 verfahrbar ausgebildet. Beim Befüllen von mehreren aneinander anschliessend angeordneten Formkassetten, bzw. Reihen von Formen 2, wird jeweils eine Kassette bzw. eine Reihe befüllt und anschliessend die Brückeneinrichtung 25 zum Befüllen der nächsten Reihe zu dieser verfahren. Es werden immer mindestens zwei vorzugsweise mindestens drei, insbesondere etwa vier, fünf, sechs oder sieben Formen gleichzeitig von diesen zugeordneten Entmolkungs-Vorrichtungen 3 gefüllt. Vor dem Einführen von Pressstempeln in die Formen 2 muss die Brückeneinrichtung 25 aus dem Bereich der Formen 2 weggeführt werden. Beim Befüllen von Wannen 1 wird die Brückeneinrichtung 25 gegebenenfalls mehrmals, vorzugsweise aber nur einmal über die gesamte Wannenlänge verfahren und dabei Käsebruch vorzugsweise kontinuierlich bahnweise eingefüllt. Der Käsebruch tritt immer gleichzeitig aus mindestens zwei vorzugsweise mindestens drei, insbesondere etwa vier, fünf, sechs oder sieben Entmolkungs-Vorrichtung aus, so dass ein gleichmässiges Befüllen der Wanne 1 gewährleistet ist.

Die Ableitvorrichtungen 10 aller Entmolkungs-Vorrichtungen 3 sind als gemeinsame, sich unter allen Trommelbereichen mit Molke-Durchtrittsöffnungen erstreckende, Kanalvorrichtung ausgebildet. Ein von der Mitte der Brückeneinrichtung 25 gegen beide Seiten geneigter Ablaufkanal 10a führt an beiden Kopfseiten der Brückeneinrichtung 25 zu einem Molkenabflussbereich 10b.

## Patentansprüche

1. Verfahren zum Abfüllen von teilweise entmolktem Käsebruch bei dem ein Käsebruch-Molke-Gemisch in einem Entmolkungsschritt in teilweise entmolkten Käsebruch und Molke aufgetrennt wird und der teilweise entmolkte Käsebruch in ein Aufnahmemittel (1, 2) eingefüllt wird, **dadurch gekennzeichnet, dass** vor dem Entmolkungsschritt ein Verteilschritt vorgesehen ist, bei dem der Käsebruch-Molke-Fluss zumindest in zwei Teilflüsse aufgetrennt wird, die getrennten Entmolkungs-Vorrichtungen (3) zugeführt werden, welche Vorrichtungen (3) so über dem Aufnahmemittel (1, 2) angeordnet werden, dass der aus den Entmolkungs-Vorrichtungen (3) austretende Käsebruch das Aufnahmemittel (1, 2) vergleichmässigt befüllt.

2. Verfahren nach Anspruch 1, **dadurch gekennzeichnet, dass** der Käsebruch
a) in Formen (2) gefüllt wird, wobei immer mindestens zwei vorzugsweise mindestens drei, insbesondere etwa vier, fünf, sechs oder sieben Formen (2) gleichzeitig von diesen zugeordneten Entmolkungs-Vorrichtungen (3) gefüllt werden und nach dem vollständigen Befüllen parallel gefüllter Formen (2) die Entmolkungs-Vorrichtungen (3) relativ zu den Formen (2) bewegt werden, um das Befüllen weiterer Formen (2) oder das Einführen von Pressstempeln in die Formen (2) zu ermöglichen; oder
b) in eine Wanne (1) gefüllt wird, wobei der Käsebruch immer gleichzeitig aus mindestens zwei vorzugsweise mindestens drei, insbesondere etwa vier, fünf, sechs oder sieben Entmolkungs-Vorrichtung (3) austritt und die Entmolkungs-Vorrichtungen (3) entlang einer Wannenachse bewegt werden, so dass ein gleichmässiges Befüllen von Wannenbahnen gewährleistet wird.

3. Verfahren nach Anspruch 1 oder 2, **dadurch gekennzeichnet, dass** zum Durchführen des Entmolkungsschrittes das Käsebruch-Molke-Gemisch in drehende Trommeln (5) mit in den Mantelflächen (5a) ausgebildeten Molke-Durchtrittsöffnungen eingeführt wird, wobei die untenliegenden Mantelbereiche zur Horizontalen geneigt verlaufen, so dass der Käsebruch unter Umwälzbewegungen auf den Mantelinnenflächen von Einfüllbereichen (7) zu Austrittsbereichen (8) gelangt und die durch die Molke-Durchtrittsöffnungen austretende Molke vom Käsebruch getrennt abgeleitet wird.

4. Verfahren nach einem der Ansprüche 1 bis 3, **dadurch gekennzeichnet, dass** der Verteilschritt in einem geschlossenen Rohrsystem (19-21) durchgeführt wird, vorzugsweise indem das Käsebruch-Molke-Gemisch von einem ersten, zentral gespiesenen Verteilrohr (19), gegebenenfalls durch mindestens zwei, insbesondere aber vier, parallele Verbindungsleitungen (20) in ein zweites Verteilrohr (21) und von dort, oder direkt vom ersten Verteilrohr (19), über mindestens drei, insbesondere vier, fünf, sechs oder sieben Zuführleitungen (6) zu einer entsprechenden Zahl von Entmolkungs-Vorrichtungen (3) geführt wird.

5. Abfüll-Vorrichtung zum Durchführen des Verfahrens nach Anspruch 1 mit einem Entmolkungsmittel zum teilweisen Entmolken des Käsebruch-Molke-Gemisches und einem Aufnahmemittel (1, 2) zum Aufnehmen des teilweise entmolkten Käsebruches, **dadurch gekennzeichnet, dass** das Entmolkungsmittel mindestens zwei, einem Aufnahmemittel (1, 2) zu dessen Befüllung zugeordnete, Entmolkungs-Vorrichtungen (3) umfasst und ein Verteilmittel (18) zur parallelen Speisung der Entmolkungs-Vorrichtungen (3) vorgesehen ist.

6. Abfüll-Vorrichtung nach Anspruch 5, **dadurch gekennzeichnet, dass** jede Entmolkungs-Vorrichtung (3) eine drehbar gelagerte Trommel (5) umfasst, deren untenliegender Mantelbereich zur Horizontalen geneigt verläuft und in deren Mantelfläche Molke-Durchtrittsöffnungen ausgebildet sind, wobei eine Zuführleitung (6) in einem Einfüllbereich (7) des Trommelinnenraumes mündet, der Käsebruch unter Umwälzbewegungen auf der Mantelinnenfläche vom Einfüllbereich (7) zu einem Austrittsbereich (8) bewegbar ist und die durch die Molke-Durchtrittsöffnungen austretende Molke vom Käsebruch getrennt durch eine Ableitvorrichtung (10) ableitbar ist.

7. Abfüll-Vorrichtung nach Anspruch 6, **dadurch gekennzeichnet, dass** die Trommeln (5) aller Entmolkungs-Vorrichtungen (3) im wesentlichen parallel nebeneinander an einer relativ zum Aufnahmemittel (1, 2) bewegbaren, das Aufnahmemittel (1, 2) in einer Richtung überspannenden, Brückeneinrichtung (25) gelagert sind und vorzugsweise mindestens eines der nachfolgenden Merkmale vorgesehen ist,
a) die Trommeln (5) sind von einer gemeinsamen Antriebsvorrichtung antreibbar, deren Antriebsmotor (16) vorzugsweise über eine Koppelungsvorrichtung (24) trennbar an der Brückeneinrichtung (25) befestigt ist und deren Übertragungssystem zumindest ein Endloselement - wie etwa eine Kette oder einen Riemen - umfasst, das kraftschlüssig mit den Trommeln (5) und mit dem Antriebsmotor (16) verbindbar ist;
b) die Ableitvorrichtungen (10) aller Entmolkungs-Vorrichtungen (3) sind als gemeinsame, sich unter allen Trommelbereichen mit Molke-Durchtrittsöffnungen erstreckende, Kanalvorrichtung ausgebildet, die lediglich an einer oder an beiden Kopfseiten der Brückeneinrichtung (25) einen Molkenabflussbereich (10b) umfasst;
c) jedem Austrittsbereich (8) ist eine Leiteinrichtung (9) zugeordnet, durch die der Käsebruch in das Aufnahmemittel (1, 2) gelangt;
d) jede Trommel (5) ist an einer ersten Endfläche mit einer in der Trommelachse angeordneten Welle (12) verbunden, wobei die Welle (12) über ein Gleitlager (13) an der Brückeneinrichtung (25) gelagert und vorzugsweise über ein Kopplungselement (15) antreibbar ist;
e) jede Trommel (5) ist an einer zweiten Endfläche mit der Mantelfläche (5a) an mindestens zwei an der Brückeneinrichtung (25) drehbar befestigten Rollen (16) gelagert;
f) die Zuführleitung (6) jeder Trommel (5) führt durch eine zweite Endfläche im Trommelinnenraum gegen eine erste Endfläche, welche vorzugsweise als Prallfläche (17) ausgebildet ist; und
g) die Trommeln (5) sind gegebenenfalls konisch mit insbesondere horizontal ausgerichteten Trommelachsen oder aber vorzugsweise zylindrisch mit zur Horizontalen geneigten Trommelachsen ausgebildet.

8. Abfüll-Vorrichtung nach einem der Ansprüche 5 bis 7, **dadurch gekennzeichnet, dass** das Verteilmittel (18) ein geschlossenes Rohrsystem (19-21) umfasst, wobei von einem ersten, vorzugsweise zentral gespiesenen, Verteilrohr (19) gegebenenfalls mindestens zwei, insbesondere aber vier, parallele Verbindungsleitungen (20) in ein zweites Verteilrohr (21) und von diesem, oder direkt vom ersten Verteilrohr (19), mindestens drei, insbesondere vier, fünf, sechs oder sieben Zuführleitungen (6) zu einer entsprechenden Zahl von Entmolkungs-Vorrichtungen (3) führen.

9. Entmolkungs-Vorrichtung mit einer Haltevorrichtung und einem Trennelement, das Molke durchlässt Käsebruch aber zurückhält, **dadurch gekennzeichnet, dass** das Trennelement als drehbar gelagerte Trommel (5) ausgebildet ist, deren untenliegender Mantelbereich zur Horizontalen geneigt verläuft und in deren Mantelfläche (5a) Molke-Durchtrittsöffnungen ausgebildet sind, wobei eine Zuführleitung (6) in einem Einfüllbereich (7) des Trommelinnenraumes mündet, der Käsebruch unter Umwälzbewegungen auf der Mantelinnenfläche vom Einfüllbereich (7) zu einem Austrittsbereich (8) bewegbar ist und die durch die Molke-Durchtrittsöffnungen austretende Molke vom Käsebruch getrennt durch eine Ableitvorrichtung (10) ableitbar ist.

10. Entmolkungs-Vorrichtung nach Anspruch 9, **dadurch gekennzeichnet, dass** mindestens eines der nachfolgenden Merkmale vorgesehen ist,
a) die Trommel (5) ist an einer ersten Endfläche mit einer in der Trommelachse angeordneten Welle (12) verbunden, wobei die Welle (12) über ein Gleitlager (13) an der Haltevorrichtung gelagert und vorzugsweise über ein Kopplungselement (15) antreibbar ist;
b) die Trommel (5) ist an einer zweiten Endfläche mit der Mantelfläche (5a) an mindestens zwei an der Haltevorrichtung drehbar befestigten Rollen (16) gelagert;
c) die Zuführleitung (6) führt durch eine zweite Endfläche im Trommelinnenraum gegen eine erste Endfläche, welche vorzugsweise als Prallfläche (17) ausgebildet ist; und
d) die Trommel (5) ist gegebenenfalls konisch mit insbesondere horizontal ausgerichteter Trommelachse oder aber vorzugsweise zylindrisch mit zur Horizontalen geneigten Trommelachse ausgebildet.
